# NEUE EUROPÄISCHE PATENTSCHRIFT

(11) **EP 0 222 068 B2**
(45) Veröffentlichungstag und Bekanntmachung des Hinweises auf die Entscheidung über den Einspruch: **17.01.1996**
(45) Hinweis auf die Patenterteilung: 19.09.1990
(21) Anmeldenummer: 86110663.1
(22) Anmeldetag: 02.01.1986
(51) Int. Cl.: A47J 43/25

(54) **Küchengerät zum Schneiden von Gemüse, insbesondere Kartoffeln in Streifen**
Kitchen utensil for cutting vegetables, in particular potatoes, into strips
Ustensile de cuisine pour couper des légumes, notamment des pommes de terre, en bandes

(30) Priorität: 09.01.1985 DE 3500495
(43) Veröffentlichungstag der Anmeldung: 20.05.1987
(62) Teilanmeldung aus: 86100019.8
(73) Patentinhaber: A. Börner GmbH, D-54526 Landscheid (DE)
(72) Erfinder: Börner, Alfred, D-5524 Orsfeld (DE)
(74) Vertreter: Hoormann, Walter, Dr.-Ing.

(56) Entgegenhaltungen:
- DE-A- 3 009 213
- DE-C- 195 823
- FR-A- 323 456
- FR-A- 634 732

## Beschreibung

Die Erfindung betrifft einen gattungsgemäßen Rohkostschneider nach dem Oberbegriff des Anspruchs 1.

Solche Küchengeräte finden Anwendung bei der Zubereitung von Kartoffelpuffern, Rohkostsalaten und dergleichen. Ein gattungsgemäßes Küchengerät mit den Merkmalen aus dem Oberbegriff des Anspruchs 1, das eine Kombination zwischen einem Rohkostschneider und einer Reibe darstellt, ist aus der FR-A-323 456 bekannt. Mit dem bekannten Küchengerät lassen sich insbesondere Kartoffelstreifen nur sehr unvollkommen herstellen, da die rohen oder halbrohen Kartoffeln durch die Anordnung der Messer oft nur angeschnitten, die dabei erzeugten Streifen aber nicht vollständig abgeschnitten werden.

Beim erneuten Führen des Schneideguts über die Messer legen sich die angeschnittenen Streifen teilweise quer vor die Schneiden und werden so zertrennt oder sie gelangen nochmals in Längsrichtung in den Bereich einer Schneide, so daß sie in dieser Richtung ein weiteres Mal zerteilt werden. Die Folge ist ungleichmäßiges Schneidgut sowie eine große Verstopfungsgefahr der Messerreihen. Darüber hinaus ist die Anordnung der Messerreihen an einem Ende des Küchengeräts und das Vorsehen einer einzigen Anlauffläche für ein einfaches und schnelles Schneiden von Rohkost in Streifen hinderlich.

Der Erfindung liegt daher die Aufgabe zugrunde, das bekannte Küchengerät dahingehend weiterzuentwickeln, daß jegliche Art von Rohkost, insbesondere rohe und halbrohe Kartoffeln, auf einfache und schnelle Weise ohne Verstopfungsgefahr der Messer zu möglichst gleichmäßigem Schneidgut geschnitten werden kann.

Diese Aufgabe wird erfindungsgemäß durch die im Kennzeichen des Anspruchs 1 aufgeführten Merkmale gelöst.

Besonders vorteilhafte Ausführungsformen der Erfindung ergeben sich aus den Unteransprüchen.

Die Erfindung ermöglicht auf einfache und schnelle Weise das sachgerechte Schneiden von Gemüsen, wie z. B. Kartoffeln, in Streifen. Weiterhin gestattet die Erfindung eine platzsparende Bauweise des Küchengerätes, da nunmehr sowohl bei der Hin- als auch bei der Herbewegung Streifen geschnitten werden und somit für die gleiche Arbeitsgeschwindigkeit lediglich die Hälfte der beim Stand der Technik benötigten Messerreihen erforderlich sind. Durch die beidseitig der Messerreihen angeordneten Anlaufflächen wird das mühelose Schneiden noch weiter gefördert, da das Gemüse mit Schwung über die Messerreihen geführt werden kann. Dadurch verringert sich die Kraft, die zum Führen des Gemüses über die Schneide notwendig ist, so daß insbesondere auch halbrohe Kartoffeln nicht durch zu große Haltekräfte bereits vor dem vollständigen Zerschneiden zerstört werden.

Es ist besonders günstig, wenn zwei gegeneinander versetzte Messerreihen vorgesehen sind. Dadurch wird bewirkt, daß die Unterseite der Kartoffel jeweils nach vollständigem Führen über die Messerreihen wieder nahezu plan wird, so daß bei jeder Hin- und Herbewegung über die Messerreihen fast exakt gleiche Streifen geschnitten werden.

Dadurch, daß das Messerende auf der Unterseite des Messers von der Ebene der Grundplatte abstehend ausgebildet ist, ergibt sich in vorteilhafter Weise, daß insbesondere die halbrohen Kartoffeln sich zu spanartig aufrollenden Streifen verarbeiten lassen. Als Messerende ist dabei die Stelle des Messers zu verstehen, an der der Kartoffelstreifen das Messer verläßt. Dadurch werden einerseits z. B. Schweizer Röstis besonders locker und andererseits wächst durch diese Formgebung die Wahrscheinlichkeit, daß die Kartoffelstreifen beim Anbraten den Pfannenboden mit ihrer gewölbten Oberseite berühren, was die gleichmäßige Bräunung begünstigt. Zum Erreichen dieser Vorteile ist besonders günstig, wenn die Messerunterseite von der Schneide bis zum Messerende konkav gekrümmt verläuft. Gemäß einer Weiterbildung sind die Schneiden als Hohlkehle ausgebildet und spanförmig gebogen.

Zur Bildung von leicht schraubenförmig gestalteten Kartoffelstreifen kann die Messerdicke jeweils unsymmetrisch zu einer zur Schneidrichtung parallelen Achse verteilt sein. Die Anlaufflächen sind vorteilhafterweise glatt ausgebildet, so daß das Gemüse beim Schneiden auf seine nicht weggeschnittenen Stegen gleitet.

Für ein noch besseres Freischneiden der Messer ist es vorteilhaft, wenn unterhalb der Messer Durchbrüche in der Grundplatte vorgesehen sind, welche sich von der Oberseite der Grundplatte zu deren Unterseite hin konusartig erweitern.

Die Handhabung des erfindungsgemäßen Küchengerätes wird weiterhin dadurch vereinfacht, daß in Schneidrichtung gesehen mindestens an einem Ende der Grundplatte ein Handgriff angebracht ist.

Besonders vorteilhaft ist es, wenn die Querreihen der Messer jeweils aus einem geprägten Metallband bestehen. Dann können die Bandkanten vor dem Prägen des Bandes angeschliffen werden, so daß die nach dem Prägen entstandenen U-förmigen Schneiden besonders scharf sind und somit das Schneiden des Gemüses wesentlich erleichtern.

Nachfolgend werden Ausführungsbeispiele der Erfindung anhand von Zeichnungen näher erläutert. Es zeigen:
Fig. 1 eine perspektivische Ansicht eines Ausführungsbeispiels des erfindungsgemäßen Rohkostschneiders; und
Fig. 2 eine vergrößerte Schnittansicht entlang der Linie VI-VI aus Fig. 1.

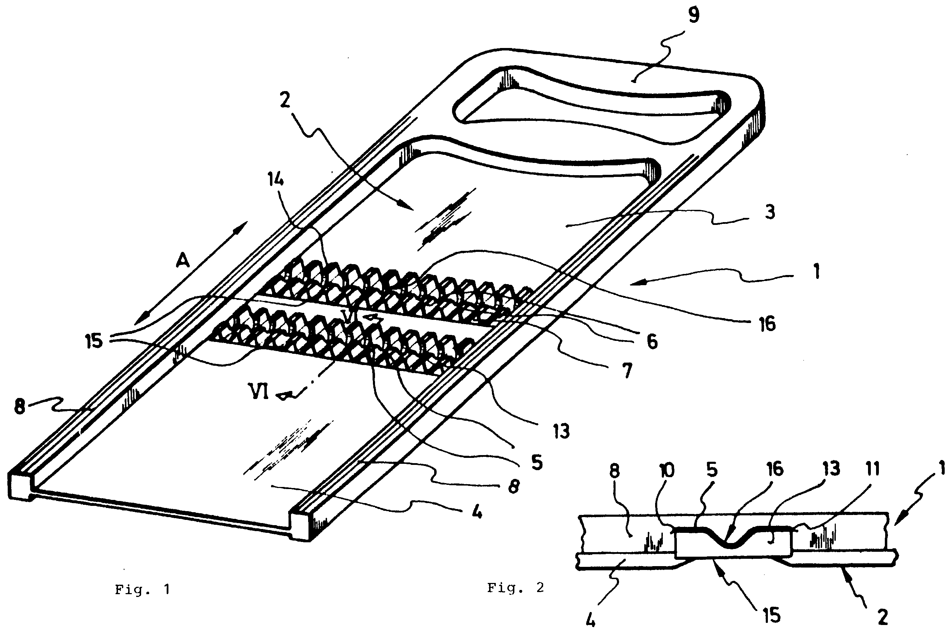

Fig. 1 zeigt den erfindungsgemäßen Rohkostschneider 1, der im wesentlichen aus einer ebenen Grundplatte 2 besteht, welche auf ihrer Oberseite zwei Anlaufflächen 3 und 4 aufweist.

Zwischen den Anlaufflächen 3 und 4 sind zwei quer zur Schneidrichtung A ausgerichtete Reihen Messer 5 und 6 angeordnet. Unterhalb der Messer 5 und 6 ist die Grundplatte 2 mit langlochförmigen Durchbrüchen 7 zum Abführen der Rohkoststreifen zur Unterseite des Rohkostschneiders 1 versehen. Die Durchbrüche 7 sind zur Unterseite der Grundplatte 2 hin konusartig verbreitert.

An den beiden Längsseiten der Grundplatte 2 sind jeweils sich in Schneidrichtung erstreckende Führungsstege 8 angebracht, welche an einem in Schneidrichtung gelegenen Ende des Rohkostschneiders 1 in einem Handgriff 9 enden.

Wie besser aus Fig. 2 ersichtlich, sind die Messer 5 und 6 beidseitig zur Schneidrichtung mit Schneiden 10 und 11 versehen. Die Schneiden 10 und 11 sind dabei parallel zur Schneidrichtung A ausgerichtet. Das heißt, die Schneidenfront ist zwar quer zur Schneidrichtung A ausgerichtet, jedoch verläuft die Unterseite und die Oberseite des vorderen Bereichs der Schneiden 10 und 11 bis zu einer gewissen Messertiefe parallel zur Schneidrichtung. Für den oberen Teil der Schneiden 10 und 11 bedeutet dies, daß er parallel zur Grundplatte 2 ausgerichtet ist.

Die Messer 5 und 6 sind jeweils aus einem Metallband 13 bzw. 14 durch Prägen hergestellt. Die Metallbänder 13 und 14 erstrecken sich durchgehend von einem Führungssteg 8 zum anderen. Der Abstand zwischen zwei benachbarten Messern 5 bzw. 6 wird durch eine eingeprägte Sicke 15 überbrückt, welche unterhalb der Ebene der Anlaufflächen 3 und 4, also unterhalb des eigentlichen Schneidebereichs liegt.

In die Oberseite der Messer 5 bzw. 6 ist eine sich über die gesamte Breite des Rohkostschneiders erstreckende Quersicke 16 eingeprägt, die die abwärts geneigten Messerenden bildet.

In Fig. 2 ist ein Schnitt quer durch ein in dem Rohkostschneider angebrachtes Metallband 13 dargestellt. Es ist gut zu erkennen, daß das Metallband mit seinen unteren, sich in Schneidrichtung erstreckenden Sicken 15 in die Grundplatte 2 eingelassen ist. Wird das Küchengerät aus Kunststoff hergestellt, so können die Metallbänder 13 bzw. 14 miteingegossen werden.

Ein besonderer Vorteil der Metallbänder liegt darin, daß diese vor ihrem Prägen angeschliffen werden können, so daß die Schneiden der Messer 5 bzw. 6 besonders scharf sind.

Im folgenden wird die Wirkungsweise des Rohkostschneiders in seiner beispielhaften Funktion als Röstischneider näher erläutert. Der Röstischneider eignet sich in gleicher Weise für rohe wie halbrohe, teilweise sogar gar gekochte Kartoffeln. Die zu schneidende Kartoffel wird beispielsweise in einen nicht näher dargestellten, aber bekannten Halter eingesetzt und mit diesem zunächst auf die Anlauffläche 3 aufgesetzt. Die Kartoffel wird dann in Schneidrichtung A über die Messer 5 und 6 hinweggeführt, wobei auf der Unterseite der Kartoffel ein Streifen abgeschnitten wird. Je nach dem, ob die Kartoffeln roh, halbroh oder gekocht ist, wird sich dabei der Streifen spanförmig gekrümmt ausbilden.

Wenn die beiden Messerreihen 5 und 6 derart versetzt angeordnet sind, daß sich ein Messer 5 jeweils mittig hinter dem Zwischenraum zwischen zwei Messern 6 befindet, ist die Kartoffel, wenn sie gänzlich über beide Messerreihen geführt ist und sich auf der Anlauffläche 4 befindet, auf ihrer Unterseite wieder nahezu plan. Die Kartoffel wird nun von der Anlauffläche 4 mit mehr oder weniger Schwung gegen die Messer 6 geführt, wobei in bereits dargestellter Weise Streifen aus der Kartoffel herausgeschnitten werden. Dieser Vorgang wird bis zum endgültigen Zerkleinern der Kartoffel wiederholt. Die Führungsstege 8 dienen zur Auflage des nicht dargestellten Halters und sind daher geringfügig höher als die maximale Höhe der Schneiden der Messer 5 und 6 ausgebildet.

Mit dem erfindungsgemäßen Rohkostschneider lassen sich außer Kartoffeln auch andere Gemüse, z. B. zu Rohkostsalaten, verarbeiten. Die Messerschneiden können dann z. B. auch Trapezform aufweisen.

Entgegen der Darstellung in den Ausführungsbeispielen können die Querreihen der Messer auch leicht schräg zur Schneidrichtung angeordnet werden, wobei aber auch dann die Schneiden parallel zur Schneidrichtung liegen.

## Patentansprüche

1. Rohkostschneider für das Schneiden von Rohkost in Streifen, mit einer Grundplatte (2), auf deren Oberseite eine Anlauffläche (3, 4) und Messerreihen (5, 6), die in zueinander versetzten Reihen ein wesentlichen quer zur Schneidrichtung verlaufend angeordnet sind, vorgesehen sind, deren Messer mit etwa U-förmigen Schneiden (10, 11) in der Höhe über die Anlauffläche (3, 4) hinaus ragen und zur Unterseite der Grundplatte (2) hin offen ausgebildet sind, wobei die Unterseite der Messer (5, 6) zumindest zum Teil zur Grundplatte hin geneigt sind und die Messerreihen (5, 6) aus einem dünnen Metallband unter Bildung von oberen und unteren Querstegen (15) und diese verbindenden Seitenstegen einstückig mäanderartig gebogen ausgebildet sind, wobei die oberen Querstege über die Anlauffläche (3, 4) hinaus ragen und bezogen auf die Schneidrichtung (A) im wesentlichen parallel zur Ebene der Anlauffläche (3, 4) ausgerichtet sind, dadurch gekennzeichnet, daß die Messerreihen (5, 6) zwischen in einer Ebene liegenden Anlaufflächen (3, 4) angeordnet sind und die Messerreihen (5, 6) mit den unteren Querstegen (15) in der Grundplatte (2) eingelassen sind, wobei die unteren Querstege (15) unterhalb der Anlaufflächen (3, 4) angeordnet sind und wobei doppelschneidige Messer gebildet sind.

2. Rohkostschneider nach Anspruch 1, dadurch gekennzeichnet, daß die oberen Querstege zur Bildung doppelschneidiger Messer (5, 6) parallel zur Ebene der Anlaufflächen (3, 4) ausgerichtet und bezogen auf die Schneidrichtung (A) jeweils in ihrer Mitte zur Grundplatte (2) hin eingedellt ausgebildet sind.

3. Rohkostschneider nach Anspruch 1 oder 2, dadurch gekennzeichnet, daß die Eindellungen (16) der oberen Querstege quer zur Schneidrichtung (A) gesehen etwa dreieckförmig ausgebildet sind.

4. Rohkostschneider nach einem der Ansprüche 1 bis 3, dadurch gekennzeichnet, daß die Eindellungen (16) mit Abstand oberhalb der Ebene der Anlaufflachen (3, 4) enden.

5. Rohkostschneider nach einem der Ansprüche 1 bis 4, dadurch gekennzeichnet, daß zwei Messerreihen (5, 6) in Schneidrichtung (A) hintereinander und quer zur Schneidrichtung (A) versetzt auf der Grundplatte (2) angeordnet sind.

6. Rohkostschneider nach einem der Ansprüche 1 bis 5, dadurch gekennzeichnet, daß die Messerreihen (5, 6) rechtwinklig zur Schneidrichtung (A) auf der Grundplatte (2) angebracht sind.

7. Rohkostschneider nach einem der Ansprüche 1 bis 6, dadurch gekennzeichnet, daß die Grundplatte (2) aus Kunststoff ausgebildet ist.

## Claims

1. A raw vegetable cutter for cutting raw vegetables into strips, comprising a baseplate (2), the top of which is provided with a contact surface (3, 4) and rows of knives (5, 6) extending substantially transversely of the direction of cutting in offset rows from one another, the knives projecting by substantially U-shaped cutting edges (10, 11) vertically above the contact surface (3, 4) and being open towards the underside of the baseplate (2), the underside of the knives (5, 6) being at least partly inclined to the baseplate and the rows of knives (5, 6) being formed from a thin metal strip with the formation of top and bottom transverse webs (15) and side webs connecting the same, the said webs being formed integrally by meander-fashion bending, the top transverse webs projecting beyond the contact surface (3, 4) and being aligned substantially parallel to the plane of the contact surface (3, 4) with respect to the cutting direction (A), characterised in that the rows of knives (5, 6) are disposed between co-planar contact surfaces (3, 4) and the rows of knives (5, 6) are embedded in the baseplate (2) by the bottom transverse webs (15), the bottom transverse webs (15) being disposed beneath the contact surfaces (3, 4), knives with double cutting edges being formed.

2. A raw vegetable cutter according to claim 1, characterised in that to form double cutting edge knives (5, 6) the top transverse webs are aligned parallel to the plane of the contact surfaces (3, 4) and are recessed in the middle in each case towards the baseplate (2) with respect to the cutting direction (A).

3. A raw vegetable cutter according to claim 1 or 2, characterised in that the recesses (16) of the top transverse webs are substantially triangular as considered transversely of the cutting direction (A).

4. A raw vegetable cutter according to any one of claims 1 to 3, characterised in that the recesses (16) terminate at a distance above the plane of the contact surfaces (3, 4).

5. A raw vegetable cutter according to any one of claims 1 to 4, characterised in that two rows of knives (5, 6) are disposed on the baseplate (2) consecutively as considered in the direction of cutting (A) and in staggered relationship transversely to the direction of cutting (A).

6. A raw vegetable cutter according to any one of claims 1 to 5, characterised in that the knife rows (5, 6) are disposed on the baseplate (2) at right angles to the cutting direction (A).

7. A raw vegetable cutter according to any one of claims 1 to 6, characterised in that the baseplate (2) is made from plastics.

## Revendications

1. Coupe-légumes destiné à couper des légumes en lamelles, comprenant une plaque de base (2) sur le côté supérieur de laquelle sont prévues une surface d'appui (3, 4) et des rangées de lames (5, 6) qui s'étendent sensiblement transversalement à la direction de coupe en étant décalées les unes par rapport aux autres et dont les lames dépassent en hauteur de la surface d'appui (3, 4) par des tranchants (10, 11) sensiblement en forme de U et sont ouvertes en direction du côté inférieur de la plaque de base (2), le côté inférieur des lames (5, 6) étant au moins en partie incliné vers la plaque de base et les rangées de lames (5, 6) étant réalisées sous la forme d'une mince bande de métal d'une seule pièce qui décrit des méandres et forme des nervures transversales supérieures et inférieures (15) et des nervures latérales reliant lesdites nervures supérieures et inférieures, les nervures transversales supérieures dépassant de la surface d'appui (3, 4) et étant orientées, par rapport à la direction de coupe (A), pour l'essentiel parallèlement au plan de la surface d'appui (3 4), caractérisé par le fait que les rangées de lames (5, 6) sont disposées entre des surfaces d'appui (3 4) situées dans un plan et que les rangées de lames (5, 6) sont encastrées avec les nervures transversales inférieures (15) dans la plaque de base (2), les nervures transversales inférieures (15) étant disposées sous les surfaces d'appui (3, 4) et des lames à double tranchant étant formées.

2. Coupe-légumes selon la revendication 1, caractérisé par le fait que les nervures transversales supérieures sont orientées parallèlement au plan des surfaces d'appui (3 4) pour former des lames à double tranchant (5, 6) et sont, par rapport à la direction de coupe (A), creusées en leur milieu en direction de la plaque de base (2).

3. Coupe-légumes selon la revendication 1 ou 2, caractérisé par le fait que les creux (16) des nervures transversales supérieures sont sensiblement triangulaires, vu transversalement à la direction de coupe (A).

4. Coupe-légumes selon l'une des revendications 1 à 3, caractérisé par le fait que les creux (16) se terminent à distance au-dessus du plan des surfaces d'appui (3, 4).

5. Coupe-légumes selon l'une des revendications 1 à 4, caractérisé par le fait que deux rangées de lames (5, 6) sont disposées sur la plaque de base (2), l'une derrière l'autre dans la direction de coupe (A) et en étant décalées transversalement à la direction de coupe (A).

6. Coupe-légumes selon l'une des revendications 1 à 5, caractérisé par le fait que les rangées de lames (5, 6) sont disposées sur la plaque de base (2) à angle droit par rapport à la direction de coupe (A).

7. Coupe-légumes selon l'une des revendications 1 à 6 caractérisé par le fait que la plaque de base (2) est en matière plastique.
